# EUROPÄISCHE PATENTSCHRIFT

(11) **EP 1 563 739 B1**
(45) Veröffentlichungstag und Bekanntmachung des Hinweises auf die Patenterteilung: **06.06.2007**
(21) Anmeldenummer: 04002931.6
(22) Anmeldetag: 10.02.2004
(51) Int. Cl.: A22C 11/02

(54) **Vorrichtung und Verfahren zum Herstellen von Würsten**
Device and method for producing sausages
Procédé et dispositif pour la production de saucisses

(43) Veröffentlichungstag der Anmeldung: 17.08.2005
(73) Patentinhaber: Albert Handtmann Maschinenfabrik GmbH & Co. KG, 88400 Biberach (DE)
(72) Erfinder: Müller, Gerhard, 88433 Schemmerhofen (DE); Reutter, Siegfried, 88436 Eberhardzell (DE); Bächtle, Manfred, 88433 Schemmerhofen (DE)
(74) Vertreter: Grünecker, Kinkeldey, Stockmair & Schwanhäusser Anwaltssozietät

(56) Entgegenhaltungen:
- WO-A-02/060264
- DE-B- 1 015 341
- US-A- 3 751 202
- US-A- 3 752 618
- US-A- 5 888 131

## Beschreibung

Die Erfindung betrifft eine Vorrichtung zur Herstellung von Würsten mit wenigstens zwei Koextrusionsköpfen zum Koextrudieren von Strängen aus Brät, die mit einem Hüllenmaterial ummantelt sind, wobei eine gemeinsame Zufuhreinrichtung für das Brät und/oder eine gemeinsame Zufuhreinrichtung für das Hüllenmaterial vorgesehen ist, die jeweils über einzelne Zufuhrelemente mit den Koextrusionsköpfen verbunden sind.

Die Erfindung betrifft ferner ein Verfahren zum Herstellen von Würsten, bei dem Stränge aus Brät, die mit einem Hüllenmaterial ummantelt sind, durch wenigstens zwei Koextrusionsköpfe koextrudiert werden, wobei das Brät durch eine gemeinsame Zufuhreinrichtung und/oder das Hüllenmaterial durch eine gemeinsame Zufuhreinrichtung zu den Koextrusionsköpfen gefördert und der jeweilige Massenstrom in Teilströme aufgeteilt wird, die zu den Koextrusionsköpfen geführt werden.

Eine Vorrichtung und ein Verfahren dieser Art sind aus der WO 02/060264 A1 bekannt.

Aus der Druckschrift US3,752,618 ist bereits ein Koextrusionskopf bekannt, der eine Zuführung für Wurstbrät sowie eine Zuführung für Hüllenmaterial aufweist. Die Zuführung für Hüllenmaterial umfasst einen Vorratsbehälter sowie eine Förderpumpe.

Es sind ferner Extrudieranlagen bekannt, mit denen gleichzeitig mehrere hautlose Stränge aus Brät erzeugt und verarbeitet werden. Diese Extrudieranlagen weisen mehrere horizontal nebeneinander angeordnete Extrusionsdüsen auf, und können bis zu zehn Strängen produzieren, die parallel zueinander von der Maschine ablaufen. Dabei ist ein Vorratsbehälter vorgesehen, aus dem Brät durch eine Zuleitung in einen Verteiler gepumpt wird, der das Brät den einzelnen Düsen zuführt. Dieser Verteiler ist als eine Druckkammer ausgebildet, an den sich ein Pumpenblock anschließt, der das in der Druckkammer befindliche Brät zu den Düsen fördert. Durch die Förderung des Bräts in die Druckkammer, werden Lufteinschlüsse vermieden und eine Homogenisierung erreicht. Außerdem ergibt sich eine ausgleichende Pufferwirkung zwischen der Zuführung und der Pumpenförderung.

Derartige Anlagen sind jedoch nur zum Extrudieren hautloser Stränge konzipiert. Beim Koextrudieren von Würsten, die mit einer Haut umgeben sind, ergeben sich spezielle Probleme, die beim Extrudieren nicht auftreten, insbesondere was die Aufbringung der Wursthülle anbelangt.

Ein Beispiel für eine Koextrudieranlage, bei der um eine pastöse Innenmasse, insbesondere aus Wurstbrät, eine Collagenhülle gespritzt wird, ist aus der EP 1 371 293 bekannt. Diese Koextrusionsanlage ist mit einem einzigen Koextrusionskopf ausgerüstet. Das Material zum Erzeugen der Hülle wird mittels einer Pumpe dem Koextrusionskopf zugeführt und durch einen die Innenmasse koaxial umgebenden Ringspalt im Koextrusionskopf auf diese gespritzt, wodurch eine Außenhaut erzeugt wird.

Zwar ist der Prozentanteil der Außenhaut an der gesamten Wurst nur gering. Schwankungen in der Zufuhrmenge des Hüllenmaterials wirken sich trotzdem stark nachteilhaft aus, da zur Erzeugung einer stabilen, also ausreichend dicken Wursthülle eine von Produkt zu Produkt unterschiedliche Zufuhrmenge nicht unterschritten werden darf. Andererseits darf aber nicht zuviel Hüllenmaterial zugeführt werden, was zwar die Stabilität der Wursthülle verbessert, aber die Weiterbehandlung der Produkte beeinträchtigt, da insbesondere die Trocknungszeit verlängert wird. Eine zu dicke Wursthülle wirkt sich außerdem nachteilig auf den späteren Verzehr des Produktes aus, da die Wurst dann keinen "Biss" hat.

Die Stabilität der Wursthülle einerseits und die schnelle Weiterbehandlung des Produktes sowie die Verzehrfreundlichkeit andererseits können also nur dann gewährleistet werden, wenn bei der Zufuhr des Hüllenmaterials sehr enge Mengentoleranzen eingehalten werden.

Die mengenmäßig exakte Zufuhr von Hüllenmaterial wird weiter erschwert, wenn mehrere parallel arbeitende Koextrusionsköpfe zur gleichzeitigen Herstellung mehrerer Wurststränge verwendet werden.

Eine solche Koextrudieranlage mit mehreren Köpfen ist aus der eingangs genannten WO 02/060264 A1 bekannt. Diese Anlage umfasst sechs Koextrusionsköpfe, die parallel angeordnet sind und mit einer Verteilerleiste für die Brätzufuhr und einer Verteilerleiste für die Hüllenmaterialzufuhr verbunden sind. Die Verteilerleisten sind jeweils über einzelne Leitungen mit den verschiedenen Koextrusionsköpfen gekoppelt und werden über zwei Zuleitungen mit Brät bzw. mit Hüllenmaterial gespeist. Das Wurstbrät und das Hüllenmaterial werden dabei in der jeweiligen Zuleitung aufgespalten und dann über die einzelnen Leitungen den parallel angeordneten Koextrusionsköpfen zugeführt. Dies hat starke Druckunterschiede in den einzelnen Leitungen zur Folge, was sich insbesondere bei der Zufuhr des Hüllenmaterials extrem negativ auswirkt, da dadurch keine gleichmäßig dicken Außenhäute mit reproduzierbarer Qualität erzeugt werden können. Außerdem kann die Hautdicke nicht an unterschiedliche Produkte angepasst werden.

Es wurden deshalb Anstrengungen unternommen, um auf Koextrudieranlagen mit mehreren Koextrusionsköpfen gleichbleibend exakte Produkte mit hinreichend konstanter Hautdicke zu erzeugen.

Dazu wurde insbesondere die gemeinsame Zufuhr des Füllgutes bzw. des Hüllenmaterials aufgegeben, die durch individuell versorgte Koextrusionsköpfe ersetzt wurde, so dass jedem Koextrusionskopf mindestens eine eigene Pumpe für die Massezufuhr zugeordnet ist. Zwar wird dadurch eine gewisse Beeinflussung der Zufuhrmenge über die Förderleistung der jeweiligen Pumpe erreicht. Allerdings steigt durch den Einsatz mehrerer Pumpen der Leistungsbedarf der Koextrudieranlage stark an. Außerdem erlaubt dieses Konzept keine schnelle und flexible Anpassung an kurzfristige Mengenschwankungen da ein solches System im allgemeinen zu träge reagiert.

In der vorstehend genannten WO 02/060264 A1 ist ferner offenbart, dass die Ausstoßgeschwindigkeit der einzelnen Koextrusionsköpfe angeglichen werden soll. Dies ist insofern wichtig, als im Weiteren Verlauf der Verarbeitung die einzelnen Wurststränge zu Gebinden zusammengefasst werden, was durch eine homogene Ausstoßgeschwindigkeit erleichtert wird. Das Problem, stabile und gleichzeitig nicht zu dicke Wursthüllen zu erzeugen, wird dadurch nicht berührt.

Der Erfindung liegt deshalb die Aufgabe zugrunde, eine Vorrichtung und ein Verfahren zum Herstellen von Würsten anzugeben, wobei mehrere Wurststränge gleichzeitig durch Koextrudieren erzeugt werden und die Würste eine stabile, aber nicht zu dicke Haut aufweisen.

Erfindungsgemäß wird diese Aufgabe durch eine Vorrichtung mit den Merkmalen des Anspruchs 1 und durch ein Verfahren mit den Merkmalen des Anspruchs 8 gelöst.

Der Vorteil der Erfindung liegt darin, dass durch Regelung bzw. Steuerung des Volumens und/oder Drucks des Hüllenmaterialstromes eine exakte Dosierung des Hüllenmaterials möglich wird, wodurch die Dicke der Außenhaut genau eingestellt werden kann. Damit ist es nunmehr möglich, selbst bei einer gemeinsamen Hüllenmaterialfzufuhr für mehrere Koextrusionsköpfe, sowohl ungewollte Mengenschwankungen zu kompensieren als auch die Hautdicke an unterschiedliche Produkte unter Berücksichtigung spezieller Kundenwünsche anzupassen.

Überdies führt die Erfindung zu Kostenvorteilen, da nur genau soviel Hüllenmaterial zugeführt werden muss, wie auch tatsächlich für eine ausreichend stabile Hülle erforderlich ist. Es wird also vergleichsweise weniger Hüllenmaterial verbraucht. Außerdem können bei niedrigem Leistungsbedarf exakte Produkte mit gleichbleibend hoher Qualität erzeugt werden.

Erfindungsgemäß sind die Mittel zur Regelung/Steuerung des Volumens und/oder des Drucks in der Zufuhreinrichtung für das Hüllenmaterial so angeordnet, dass die Aufspaltung des Hüllenmaterialstroms zu den einzelnen Zufuhrelementen durch die Mittel zur Regelung/Steuerung des Volumens und/oder des Drucks erfolgt. Mit dieser bevorzugten Ausgestaltung der Erfindung werden Schwankungen in der Zufuhrmenge besonders wirkungsvoll unterdrückt, da die Regelung/Steuerung des Volumens und/oder des Drucks bereits bei der Erzeugung der Teilströme erfolgt, so dass durch die Aufspaltung des Gesamtstroms in die einzelnen Teilströme keine Druckverluste entstehen bzw. sofort ausgeglichen werden.

In bevorzugter Weise sind die Mittel zur Regelung/Steuerung des Volumens und/oder des Drucks auch in der Zufuhreinrichtung für das Brät vorgesehen und so angeordnet, dass die Aufspaltung des Brätstroms zu den einzelnen Zufuhrelementen durch die Mittel zur Regelung/Steuerung des Volumens und/oder des Drucks erfolgt. Diese Ausgestaltung der Erfindung gestattet nicht nur die Regelung und Dosierung der zugeführten Hüllenmaterialmenge, sondern auch die Regelung bzw. Dosierung der Brätmenge, mit der die einzelnen Koextrusionsköpfe versorgt werden. Überdies hat diese Ausgestaltung ebenfalls den Vorteil, dass Mengenschwankungen besonders wirksam unterdrückt werden, da die Regelung der Brätmenge zusammen mit der Aufspaltung des Gesamtbrätstroms in die Teilbrätströme erfolgt.

Die Mittel zur Regelung/Steuerung des Volumens und/oder des Drucks können Stromteiler umfassen. Diese Stromteiler können wiederum Zahnradpumpen und/oder Flügelzellenpumpen umfassen. Diese Dosiermittel eignen sich besonders gut zur Regelung/Steuerung des Volumens und/oder des Drucks des jeweiligen Produktstroms, also sowohl des Füllgutes als auch des Hüllenmaterials.

Bevorzugterweise sind mehrere Zahnradpumpen oder Flügelzellenpumpen zu einem Pumpenblock zusammengefasst. Die Stromteiler können unterschiedlich ausgelegt sein, insbesondere durch unterschiedliche Fördermengen pro Umdrehung aufgrund unterschiedlicher Volumina der einzelnen Pumpenblöcke und/oder durch separate Antriebe für jeden Pumpenblock und/oder durch verschiedene Getriebestufen pro Pumpenblock. Auf diese Weise können parallel zueinander unterschiedlicher Kaliber hergestellt werden, beispielsweise Kaliber 15, 17, 19, 21 usw..

Nachfolgend wird die Erfindung anhand von Ausführungsbeispielen unter Bezug auf die beigefügten schematischen Zeichnungen näher erläutert. In diesen zeigen:
- Fig. 1: ein Flussdiagramm, das einen Aufbau mit Stromteiler, sowohl für das Füllgut als auch für das Hüllenmaterial, darstellt;
- Fig. 2: ein Flussdiagramm, das einen Aufbau mit Stromteiler nur für das Hüllenmaterial und mit separaten Zuführungen für das Füllgut darstellt und
- Fig. 3: ein Flussdiagramm, das einen Aufbau mit Regeleinheiten in den einzelnen Zufuhrelementen für die Zuführung des Hüllenmaterials und mit Stromteilern für die Zufuhr des Füllgutes darstellt.

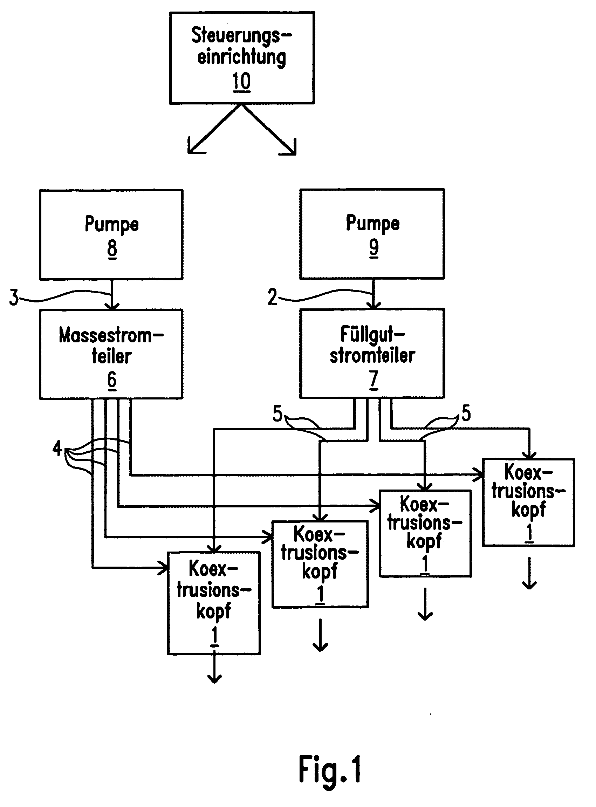

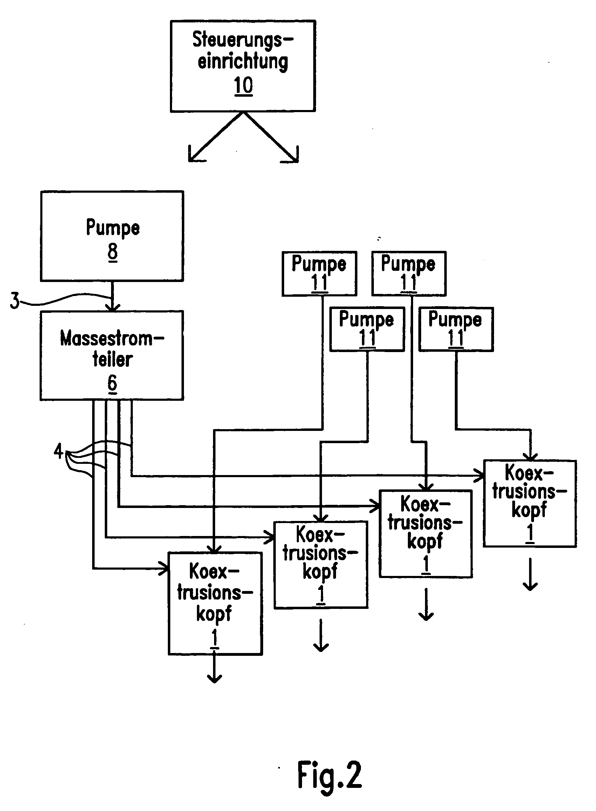

Fig. 2 zeigt in schematischer Weise den prinzipiellen Aufbau einer Koextrudieranlage nach einem erfindungsgemäßen Ausführungsbeispiel in Form eines Flussdiagramms. Die Koextrudieranlage verfügt über einen nicht gezeigten Vorratsbehälter, der das Hüllenmaterial enthält. Diesem Vorratsbehälter ist eine erste Pumpe 8 zugeordnet, die das Hüllenmaterial aus dem Vorratsbehälter in eine gemeinsame Zufuhreinrichtung 3 fördert. Diese gemeinsame Zufuhreinrichtung 3 kann eine Zuleitung umfassen, die mit einem Verteiler verbunden ist. Wie ferner in Fig. 1 zu erkennen, ist zwischen der gemeinsamen Zufuhreinrichtung 3 für das Hüllenmaterial und den einzelnen Zufuhrelementen 4, die zu den jeweiligen Koextrusionsköpfen 1 führen, ein Massestromteiler als Mittel 6 zur Regelung/Steuerung des Volumens und/oder des Drucks vorgesehen. Der Massestromteiler kann mehrere Zahnradpumpen und/oder Flügelzellenpumpen umfassen.

Der Massestromteiler ist so mit dem Verteiler verbunden, dass die Aufspaltung des aus der gemeinsamen Zufuhreinrichtung 3 kommenden Hüllenmaterialstromes in die Teilströme, die in den einzelnen Zufuhrelementen weitergefördert werden, durch den Massestromteiler erfolgt. Dazu können die Pumpen jeweils im Bereich der Eintrittsöffnungen der einzelnen Zufuhrelemente 4, also der einzelnen zu den jeweiligen Koextrusionsköpfen 1 führenden Leitungen angeordnet sein. Die einzelnen Pumpen können durch einen Motor oder alternativ durch den Massestrom angetrieben werden.

Die Pumpen sind also zwischen die gemeinsame Zuleitung und die zu den Koextrusionsköpfen 1 führenden Einzelleitungen geschaltet und gestatten die Regelung bzw. Steuerung des Volumens und/oder des Drucks des Hüllenmaterialstromes.

Die einzelnen Pumpen können zu einem Pumpenblock zusammengefasst werden, der einen synchronen Antrieb aufweist. Die Einstellung unterschiedlicher Fördermengen zur Herstellung unterschiedlicher Produkte auf den einzelnen Koextrusionsköpfen 1 erfolgt durch unterschiedliche Volumina der einzelnen Pumpblöcke oder durch die Bereitstellung einzelner Antriebe für jeden Pumpenblock. Ferner können die einzelnen Pumpenblöcken mit entsprechenden Getriebestufen ausgerüstet sein, um so unterschiedliche Fördermengen zu transportieren.

Außerdem ist es möglich, auch die einzelnen Pumpen auf die vorstehend genannte Weise zu modifizieren bzw. jeweils mit eigenen Antrieben auszurüsten, um einen noch flexibleren Betrieb der Koextrudieranlage zu erreichen.

Ferner ist es möglich, die Koextrusionsköpfe parallel, reihenweise übereinander oder sternförmig in einer oder in mehreren Ebenen anzuordnen. Die in den Figuren gezeigte Anzahl von vier Koextrusionsköpfen ist beispielhaft zu verstehen. Eine größere oder kleinere Anzahl von Koextrusionsköpfen ist ebenfalls möglich.

Wie der Fig. 1 weiter zu entnehmen, ist die für das Füllgut, also für das Brät, vorgesehene Förderstrecke analog zu der für das Hüllenmaterial vorgesehenen Förderstrecke aufgebaut. Insbesondere umfasst die für das Brät vorgesehene Förderstrecke eine zweite Pumpe 9, die das Brät über eine weitere gemeinsame Zufuhreinrichtung 2, die ähnlich wie die gemeinsame Zufuhreinrichtung 3 für das Hüllenmaterial aufgebaut ist, zu dem Füllgut-Stromteiler 7 fördert. Der Füllgut-Stromteiler 7 kann an einen Verteiler derart angeschlossen sein, dass die einzelnen Pumpen des Füllgut-Stromteilers im Bereich der Eintrittsöffnungen der einzelnen Zufuhrelemente 5, also den zu den Koextrusionsköpfen 1 führenden Leitungen, angeordnet sind.

In den Koextrusionsköpfen 1 wird das Brät und das Hüllenmaterial zu Würsten koextrudiert, die mit einer Haut umgeben sind.

Ferner kann die in Fig. 1 dargestellte Koextrudieranlage eine Steuerungseinrichtung 10 aufweisen.

Das in Fig. 2 dargestellte Flussdiagramm einer weiteren Koextrudieranlage zeigt eine Förderstrecke für das Hüllenmaterial, die der in Fig. 1 gezeigten Förderstrecke entspricht. Anders als bei der Koextrudieranlage nach Fig. 1 weist die Brätförderstrecke der Koextrudieranlage nach Fig. 2 vier Pumpen 11 auf, die den jeweiligen Koextrusionsköpfen 1 zugeordnet sind.

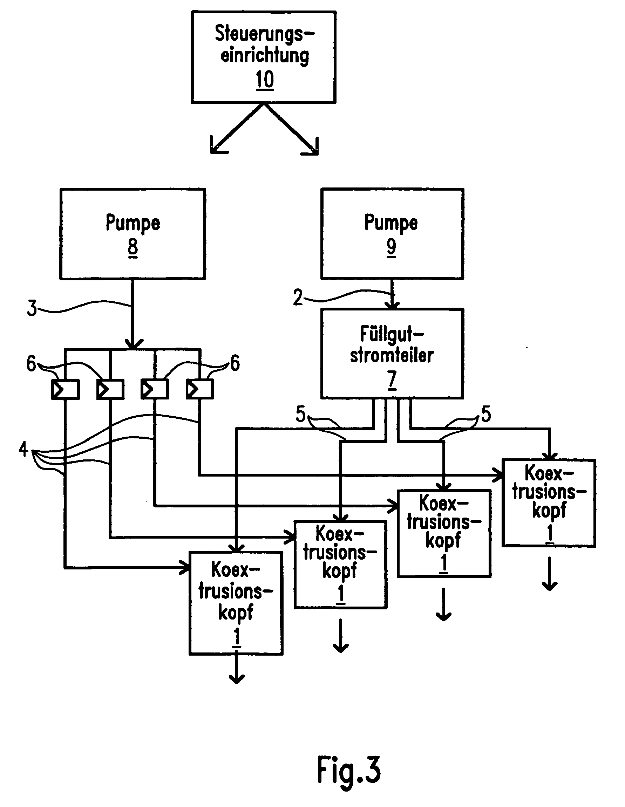

Das in Fig. 3 gezeigte Flussdiagramm stellt eine Koextrudieranlage dar, deren Brätförderstrecke der in Fig. 1 dargestellten Koextrudieranlage entspricht. Das Ausführungsbeispiel nach Fig. 3 unterscheidet sich von dem in Fig. 1 gezeigten Ausführungsbeispiel darin, dass die Mittel 6 zur Regelung/Steuerung des Drucks des Volumens und/oder des Drucks des Hüllenmaterialstromes nicht in der gemeinsamen Zufuhreinrichtung 3 für das Hüllenmaterial, sondern in den einzelnen Zufuhrelementen 4 vorgesehen sind.

## Patentansprüche

1. Vorrichtung zur Herstellung von Würsten mit wenigstens zwei Koextrusionsköpfen (1) zum Koextrudieren von Strängen aus Brät, die mit einem Hüllenmaterial ummantelt sind, wobei eine gemeinsame Zufuhreinrichtung (2) für das Brät und/oder eine gemeinsame Zufuhreinrichtung (3) für das Hüllenmaterial vorgesehen ist, die jeweils über einzelne Zufuhrelemente (4, 5) mit den Koextrusionsköpfen (1) verbunden sind,
**dadurch gekennzeichnet, dass**
wenigstens die Zufuhreinrichtung (3) für das Hüllenmaterial und/oder die zugehörigen Zufuhrelemente (4) Mittel (6) zur Regelung/Steuerung des Volumens und/oder des Drucks des Hüllenmaterialstromes aufweisen, wobei entweder die Mittel (6) zur Regelung/Steuerung des Volumens und/oder des Drucks in der Zufuhreinrichtung für das Hüllenmaterial so angeordnet sind, so dass die Aufspaltung des Hüllenmaterialstromes zu den einzelnen Zufuhrelementen (4) durch die Mittel (6) zur Regelung/Steuerung des Volumens und/oder des Drucks erfolgt, oder
die gemeinsame Zufuhreinrichtung (3) mit den einzelnen Zufuhrelementen (4) verbunden ist, so dass sich der Hüllenmaterialstrom aufspaltet und die Mittel (6) zur Regelung/Steuerung des Volumens und/oder Drucks in den Zufuhrelementen (4) vorgesehen sind.

2. Vorrichtung nach Anspruch 1,
**dadurch gekennzeichnet, dass**
die Zufuhreinrichtung (2) für das Brät Mittel (7) zur Regelung/Steuerung des Volumens und/oder des Drucks des Brätstroms aufweist, die so angeordnet sind, dass die Aufspaltung des Brätstroms zu den einzelnen Zufuhrelementen (5) durch die Mittel (7)zur Regelung/Steuerung des Volumens und/oder des Drucks erfolgt.

3. Vorrichtung nach wenigstens einem der Ansprüche 1 bis 2,
**dadurch gekennzeichnet, dass**
die Mittel (6) zur Regelung/Steuerung des Volumens und/oder des Drucks Stromteiler umfassen.

4. Vorrichtung nach Anspruch 3,
**dadurch gekennzeichnet, dass**
die Stromteiler Zahnradpumpen und/oder Flügelzellenpumpen umfassen.

5. Vorrichtung nach Anspruch 4,
**dadurch gekennzeichnet, dass**
mehrere Zahnradpumpen oder Flügelzellenpumpen zu einem Pumpenblock zusammengefasst sind.

6. Vorrichtung nach Anspruch 5,
**dadurch gekennzeichnet, dass**
die Stromteiler unterschiedlich ausgelegt sind, insbesondere durch unterschiedliche Fördermengen pro Umdrehung aufgrund unterschiedlicher Volumina der einzelnen Pumpenblöcke und/oder durch separate Antriebe für jeden Pumpenblock und/oder durch verschiedene Getriebestufen pro Pumpenblock.

7. Verfahren zum Herstellen von Würsten, bei dem Stränge aus Brät, die mit einem Hüllenmaterial ummantelt sind, durch wenigstens zwei Koextrusionsköpfe (1) koextrudiert werden, wobei das Brät durch eine gemeinsame Zufuhreinrichtung (2) und/oder das Hüllenmaterial durch eine gemeinsame Zufuhreinrichtung (3) zu den Koextrusionsköpfen (1) gefördert und der jeweilige Massenstrom in Teilströme aufgeteilt wird,
**dadurch gekennzeichnet, dass**
das Volumen und/oder der Druck wenigstens des Hüllenmaterialstromes geregelt wird, wobei Mittel zur Regelung/Steuerung des Volumens und/oder des Drucks in der Zufuhreinrichtung (3) für das Hüllenmaterial so angeordnet sind, dass die Aufspaltung des Hüllenmaterialstroms zu den einzelnen Zufuhrelementen (4) durch die Mittel (6) zur Regelung/Steuerung des Volumens und/oder des Drucks erfolgt oder
die gemeinsame Zufuhreinrichtung (3) für das Hüllenmaterial mit den einzelnen Zufuhrelementen(4)verbunden ist, so dass sich der Hüllenmaterialstrom aufspaltet, wobei das Volumen und/oder der Druck des Hüllenmateriaistroms durch die Mittel (6) zur Regelung/Steuerung des Volumens und/oder Drucks in den Zufuhrelementen (4) geregelt wird.

## Claims

1. A device for producing sausages comprising at least two coextrusion heads (1) for co-extruding strands of sausage meat which are encased with a casing material, wherein a joint supply means (2) is provided for the sausage meat and/or a joint supply means (3) for the casing material, each being connected via individual supply elements (4, 5) to the coextrusion heads (1),
**characterized in that**
at least the supply means (3) for the casing material and/or the associated supply elements (4) comprise means (6) for regulating/controlling the volume and/or the pressure of the casing material flow, wherein either the means (6) for regulating/controlling the volume and/or the pressure are arranged in the supply means for the casing material such that the division of the casing material flow to the individual supply elements (4) is carried out by the means (6) for regulating/controlling the volume and/or the pressure, or
the joint supply means (3) is connected to the individual supply elements (4) so that the casing material flow (6) is divided and the means (6) for regulating/controlling the volume and/or pressure are provided in the supply elements (4).

2. The device according to claim 1, **characterized in that** the supply means (2) for the sausage meat comprises means (7) for regulating/controlling the volume and/or the pressure of the sausage meat flow which are arranged such that the division of the sausage meat flow to the individual supply elements (5) is carried out by the means (7) for regulating/controlling the volume and/or the pressure.

3. The device according to at least one of claims 1 to 2, **characterized in that** the means (6) for regulating/controlling the volume and/or the pressure comprise flow dividers.

4. The device according to claim 3, **characterized in that** the flow dividers comprise gear pumps and/or vane-type pumps.

5. The device according to claim 4, **characterized in that** a plurality of gear pumps or vane-type pumps are combined to form a pump block.

6. The device according to claim 5, **characterized in that** the flow dividers are differently designed, particularly through different delivery rates per revolution due to different volumes of the individual pump blocks and/or through separate drives for each pump block and/or through different gear stages each pump block.

7. A method for producing sausages, wherein strands of sausage meat which are encased with a casing material are co-extruded by at least two coextrusion heads (1), wherein the sausage meat is conveyed by a joint supply means (2) and/or the casing material by a joint supply means (3) to the coextrusion heads (1) and the respective mass flow is divided into partial flows,
**characterized in that**
the volume and/or the pressure of at least the casing material flow is/are regulated, wherein the means (6) for regulating/controlling the volume and/or the pressure are arranged in the supply means (3) for the casing material such that the division of the casing material flow to the individual supply elements (4) is carried out by the means (6) for regulating/controlling the volume and/or the pressure, or
the joint supply means (3) for the casing material is connected to the individual supply elements (4) so that the casing material flow (6) is divided, wherein the volume and/or the pressure of the casing material flow is/are regulated by the means (6) for regulating/controlling the volume and/or pressure in the supply elements (4).

## Revendications

1. Dispositif de production de saucisses comprenant au moins deux têtes de coextrusion (1) pour co-extruder des cordons de chair à saucisses, qui sont gainés d'une matière à boyau, un dispositif d'alimentation commun (2) pour la chair à saucisses et/ou un dispositif d'alimentation commun (3) pour la matière à boyau étant alors prévus, lesquels sont respectivement raccordés par l'intermédiaire d'éléments d'arrivée individuels (4, 5) aux têtes de coextrusion (1),
**caractérisé en ce que**
au moins le dispositif d'alimentation (3) pour la matière à boyau et/ou les dispositifs d'arrivée (4) correspondants comportent des moyens (6) pour la régulation/le contrôle du volume et/ou de la pression du flux de matière à boyau, soit les moyens (6) pour la régulation/le contrôle du volume et/ou de la pression étant disposés dans le dispositif d'alimentation pour la matière à boyau, de sorte que la séparation du flux de matière à boyau en direction des éléments d'arrivée individuels (4) s'effectue par les moyens (6) de régulation/contrôle du volume et/ou de la pression, soit
le dispositif d'alimentation commun (3) étant raccordé aux éléments d'arrivée individuels (4), de sorte que le flux de matière à boyau se sépare et les moyens (6) de régulation/contrôle du volume et/ou de la pression sont prévus dans les éléments d'arrivée (4).

2. Dispositif suivant la revendication 1,
**caractérisé en ce que**
le dispositif d'alimentation (2) pour la chair à saucisses présente des moyens (7) de régulation/contrôle du volume et/ou de la pression du flux de chair, lesquels sont disposés de sorte que la séparation du flux de chair à saucisses en direction des éléments d'arrivée (5) individuels s'effectue par les moyens (7) pour la régulation/le contrôle du volume et/ou de la pression.

3. Dispositif suivant l'une au moins des revendications 1 à 2,
**caractérisé en ce que**
les moyens (6) de régulation/contrôle du volume et/ou de la pression comportent des diviseurs de flux.

4. Dispositif suivant la revendication 3,
**caractérisé en ce que**
les diviseurs de flux comportent des pompes à engrenages et/ou des pompes à palettes.

5. Dispositif suivant la revendication 4,
**caractérisé en ce que**
plusieurs pompes à engrenages ou pompes à palettes sont regroupées en un groupe de pompes.

6. Dispositif suivant la revendication 5,
**caractérisé en ce que**
les diviseurs de flux sont conçus différemment, en particulier par des débits de refoulement différents par tour de rotation en raison de volumes différents des groupes de pompes individuels et/ou par des commandes séparées pour chaque groupe de pompes et/ou par différents étages de transmission par groupe de pompes.

7. Procédé de production de saucisses, dans lequel sont co-extrudés des cordons de chair à saucisses, gainés d'une matière à boyau, par au moins deux têtes de coextrusion (1), la chair à saucisses étant transportée par un dispositif d'alimentation commun (2) et/ou la matière à boyau étant transportée par un dispositif d'alimentation commun (3) en direction des têtes de coextrusion (1) et le débit-masse respectif étant subdivisé en flux partiels,
**caractérisé en ce que**
le volume et/ou la pression d'au moins le flux de matière à boyau sont réglés, des moyens pour la régulation/le contrôle du volume et/ou de la pression étant disposés dans le dispositif d'alimentation (3) pour la matière à boyau de sorte que la séparation du flux de matière à boyau en direction des éléments d'arrivée individuels (4) s'effectue par les moyens (6) de régulation/contrôle du volume et/ou de la pression ou le dispositif d'alimentation commun (3) pour la matière à boyau étant raccordé aux dispositifs d'arrivée individuels (4), de sorte que le flux de matière à boyau se sépare, le volume et/ou la pression du flux de matière à boyau étant réglés dans les éléments d'arrivée (4) par les moyens (6) de régulation/contrôle du volume et/ou de la pression.
